# EUROPEAN PATENT SPECIFICATION

(11) **EP 1 398 916 B1**
(45) Date of publication and mention of the grant of the patent: **02.06.2010**
(21) Application number: 03102686.7
(22) Date of filing: 02.09.2003
(51) Int. Cl.: H04L 12/28, H04L 29/12

(54) **Method and device for connection of a device to a wireless network**
Verfahren und Gerät zur Verbindung eines Gerätes mit einem drahtlosen Netzwerk
Procédé et appareil pour connecter un dispositif à un réseau sans fil

(30) Priority: 12.09.2002 EP 02292228
(43) Date of publication of application: 17.03.2004
(73) Proprietor: Thomson Licensing, 92443 Issy-les-Moulineaux Cedex (FR)
(72) Inventor: Perrot, Sébastien, 35000 Rennes (FR); Jeanne, Ludovic, 35200 Rennes (FR); Straub, Gilles, 35690 Acigne (FR)
(74) Representative: Kohrs, Martin

(56) References cited:
- EP-A- 0 828 398
- WO-A-00/18066
- WO-A-00/76129
- WO-A-02/08857
- WO-A-02/09451
- US-A1- 2002 080 759

## Description

The invention concerns a method and a first device for connecting a second device to a network. It is in particular applicable in the case of networks requiring registration of devices for determination of a medium access control address, which is the case for example for IEEE 802.11 type networks.

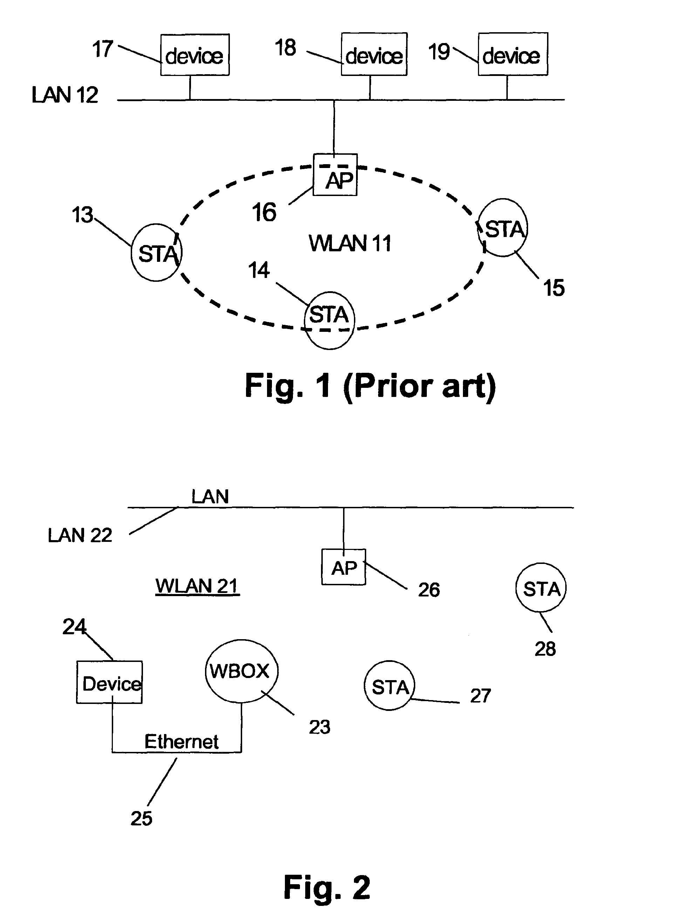

Figure 1 is a diagram of a wireless sub-network 11, conforming for example to the IEEE 802.11 specification, connected to a wired medium sub-network 2, conforming for example to the IEEE 802.3 ('Ethernet') specification. The wireless sub-network comprises a number of stations (13 to 16), one of which (16) has the function of access point ('AP'). The access point provides access to the distributed system service to the other stations, which have to associate with the access point. The access point of figure 1 also comprises a portal from the wireless sub-network to a distributed medium (not illustrated) and a portal from the distributed medium to the wired sub-network 12. This allows stations on the wireless sub-network to exchange data frames with the devices 17 to 19. Note that this is just one possible implementation.

A station that is not an access point is not allowed to host a portal for connection to another sub-network. If a device, such as a personal computer, is connected to a station e.g. via an Ethernet connection, this device will not be recognized as such on the wireless network. One possible solution would be to have the device control the configuration and management of the station to a point at which there is, virtually, a device with station functionality. For instance, specific software could be used to control the station from the device, over their link, but this would require specific software and would make connecting several devices to the same station more difficult.

The document D1, WO 00/18066 A Qualcomm Inc, 30 March 2000, cites techniques of interfacing data terminal equipment units to wireless data networks. More particularly it discloses a wireless modem for connecting a terminal equipment unit located on a wireline to a network unit over a wireless link. The wireless modem comprises a local server for assigning IP address to the terminal equipment unit.

An object of the invention is a method for connecting a device to a wireless network according to claim 1.

According to an embodiment, the addresses are the unique MAC addresses of the device, generally fixed during manufacturing.

According to an embodiment, the method comprises the step of having the bridge device monitor traffic on the wireless network for the device.

According to an embodiment, the method further comprises the step of programming packet filters for packets having as destination address the address of the device, and upon detection of such a packet, acknowledging receipt of said packet in place of the device.

According to an embodiment, the method also comprises at least one of the following steps:
- forwarding all multicast packets detected on the wireless network from the bridge device to the connected device;
- forwarding all broadcast packets detected on the wireless network from the bridge device to the connected device;
- forwarding unicast packets on the wireless network having as destination address the address of the connected device to that device.

According to an embodiment, the connection between the device and the bridge device is an Ethernet connection, and wherein the step of detecting the connection comprises monitoring packets on the Ethernet connection for detecting a previously unknown source address of an Ethernet device.

According to an embodiment, the wireless network is of the IEEE 802.11 type, further comprising the step of maintaining a single management information base for both the bridge device and the connected device.

Another object of the invention is a bridge device adapted for communication on a wireless network and for connection of a first device not having wireless communication capability according to claim 7.

Other characteristics of the invention appear in the description of a non-restrictive embodiment of the invention. This embodiment is described with the help of the following figures:
Figure 1 - already described - is a simplified diagram of a prior art network;
Figure 2 is a simplified diagram of a network comprising a device according to the present embodiment;
Figure 3 is a block diagram of a wireless box device according to the present embodiment;
Figure 4 is a message chart illustrating the obtaining of two MAC addresses from an access point by a device according to the present embodiment.
Figure 5 is a diagram of the protocol layers of an IEEE 802.11 stack of the wireless box.

The network of the present embodiment, as illustrated by figure 2, comprises a wireless sub-network 21 conforming to IEEE 802.11 and a wired sub-network 22 conforming to IEEE 802.3 (Ethernet) connected through an access point 23. The wireless sub-network comprises, in addition to the access point 23, three stations, 23, 27 and 28. The station 23 will also be referred to as 'wireless box' or 'wbox', designating its specific function for connecting other devices, in this case device 24 (e.g. a personal computer or domestic equipment such as audio/video receiver) to the wireless sub-network.
According to the present embodiment, the connection between the device 24 and the wireless box 23 is an Ethernet link. Note that this connection could be different, and based for example on USB, or another IEEE 802.x standard than Ethernet.
The device 24 and the wireless box 23 both possess independent TCP/IP/HTTP protocol stacks. The advantage of having an independent protocol stack at the level of the wireless box is that any device connected to the wireless box may control this wireless box using a standard Internet browser. According to the present embodiment, the device 24 possesses a fixed MAC address, and the wireless box also possesses a fixed MAC address.

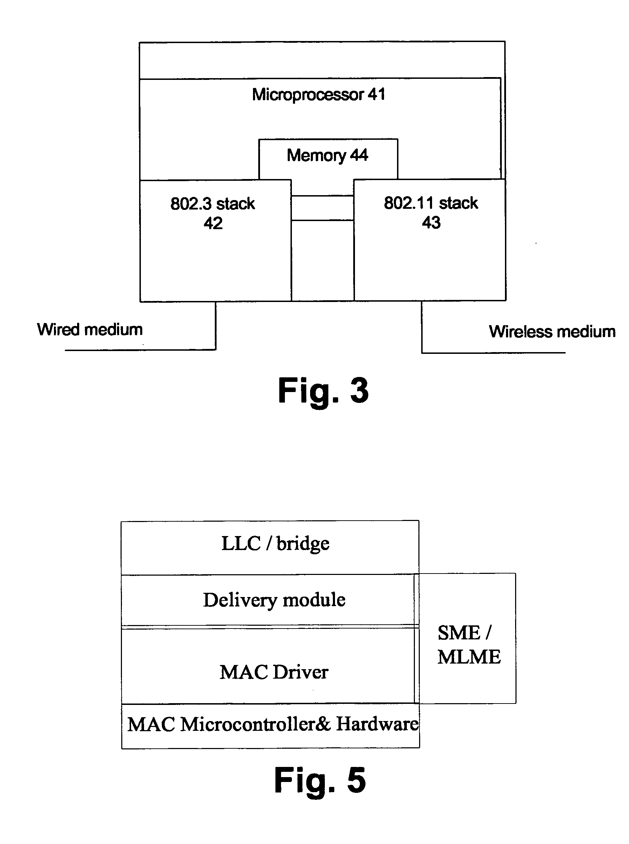

According to the present embodiment, these distinct MAC addresses are used by the device 24 and by the wireless box 23 on the wireless medium. From the point of view of the wireless sub-network, two stations will appear to be present. The station incorporating the wireless box will emulate two stations: the one representing the wireless box, and the one representing the device 24. The station incorporating the wireless box associates twice with the access point, once with each of the MAC addresses.
In an IEEE 802.11 network, the MAC address is used for a number of purposes, among which:
- certain MAC sub-layer management Entity ("MLME") actions (e.g. association, authentication, power saving...), the access point communicating with the stations and registering them using their MAC addresses;
- user control plane protocol (e.g. the MAC address is incorporated into MAC packet data units ("PDUs"), and a station detecting its MAC address in a destination address field of a packet has to generate an acknowledgment packet to the source device).
   The wireless box 23, as illustrated by figure 3, comprises, among other circuitry, a microprocessor 41 for control of the wireless box and for implementing at least part of the protocols 42, 43 necessary to interface with each medium. The corresponding data is stored in a memory 44. Certain parts of the 802.11 protocols may be implemented using dedicated hardware, instead of software run by the microprocessor. Typically, the multiple association process and subsequent management of several parallel user data flows corresponding to the different MAC addresses will be handled by software, while dedicated hardware is in charge of detecting these MAC addresses in packets on the wireless network and of generating acknowledgment packets. The dedicated MAC hardware will be referred to as IEEE802.11MAC-HW, while the MAC software will be referred to as IEEE802.11MAC-SW. A TCP/IP/http stack places itself above the MAC layer.

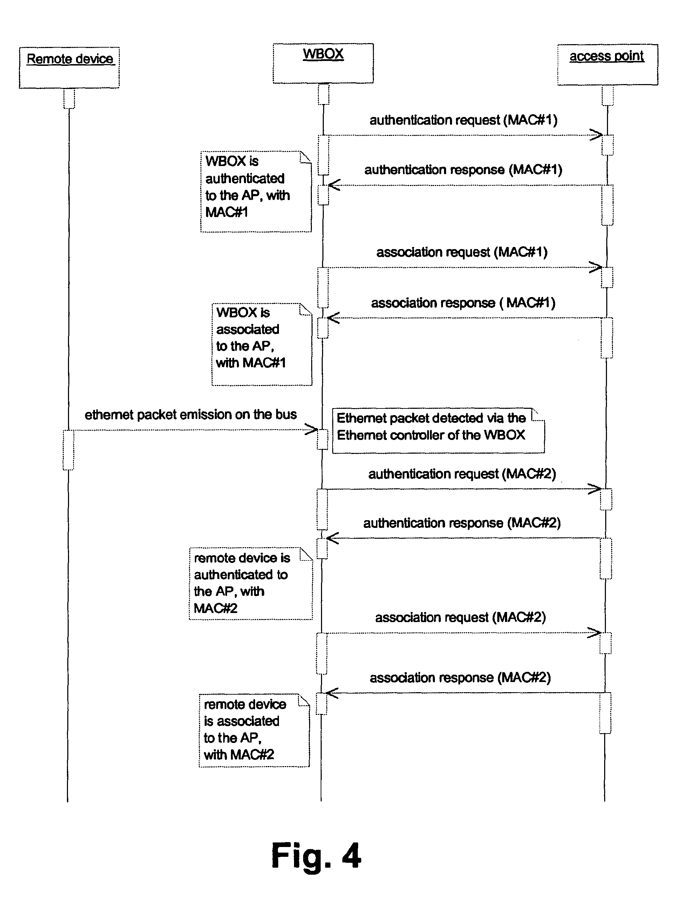

Figure 4 is a chronological diagram of messages exchanged for the authentication and association of the wireless box 23 and the device 24 as stations with the access point 26. The same process would apply if more than one device were connected to the wireless box 23.

During its own set-up phase, the wireless box first registers itself with the access point, through the authentication and association process defined by the IEEE 802.11 standard. It uses its own MAC address for these exchanges.
The wireless box then starts the registration process for the device 24. The process can be triggered for example by the detection, by the wireless box, of an Ethernet packet on the bus 25, this packet containing a previously unknown MAC source address. The process as such is the same as for the registration of the wireless box itself. The wireless box programs its IEEE802.11-HW to filter packets with both MAC addresses.
The wireless box acts as if it represented two stations (or more, depending on the number of devices connected on a link). As a consequence, certain tasks it has to carry out are to be performed twice, while some tasks or resources may be common to both of the represented stations.

Figure 5 is a diagram of the MAC layer architecture of the wireless box on the IEEE 802.11 interface.
On top of the stack resides a Logical Link Control layer that is in charge of the bridging functions of the wireless box. A MAC sublayer Management Entity (or 'MLME') provides layer management service interfaces through which layer management primitives may be invoked. A Delivery module component provides an interface to any component requiring the services of the IEEE 802.11 MAC layer. It performs the routing of frames, maintains a map of associated (BSS) and/or authenticated (IBSS) stations and manages logical FIFOs (one per associated station, should the wireless box act as access point) for delivery of frames to the MAC driver. The Delivery module is also in charge of building a 'traffic indication map' or 'TIM' which is used by the driver to generate beacons (also in case that the wireless box is an access point). Lastly, a Station Management Entity ('SME') is in charge of invoking MLME and Physical Layer Management Entity ('PLME' - not illustrated) primitives. This entity provides an interface to the Device Remote Configurator (not illustrated) when information is to be exchanged with the outside world, e.g. when a user configures the wireless box (the user can for example connect a personal computer to the network and configure certain parameters). The SME is responsible for gathering layer-dependent status data from various layer management entities as well as setting the value of layer-specific parameters ('MIB' attributes, where 'MIB' stands for Management Information Base). In other words, the SME is in charge of configuring the station.

According to the present embodiment, there is only one MIB for the wireless box and the device connected to it. This implies that the same encryption keys are used for both the wireless box and the device. The power management mode is also the same.
According to a variant embodiment of the invention, not all MIB parameters are common. For example, different encryption keys may be used.
A remote network manager (e.g. a personal computer running a web browser) may nevertheless see as many MIBs as there are MAC addresses. Configurable parameters and statistics are nevertheless the same. The wireless box, as a station, is remotely configurable from the device, from another station, or from a device located on the LAN to which the access point is connected.
As previously mentioned, authentication and association are performed for both the wireless box and the device 24. The same is true for the 'join' procedure (used for synchronization of a station with a BSS (Basic Service Set), as defined by IEEE 802.11 ).

Two modes may be used by stations to access the medium: the DCF mode (distributed coordination function mode) and the PCF mode (point coordination function). The DCF mode relies on a CSMA/CA mechanism (carrier sense multiple access / collision avoidance), and uses a random back-off period in case the medium is busy. The PCF mode uses a point coordinator for managing access to the medium.

The emission of packets in the DCF mode will first be described.
The IEEE802.11 MAC-HW performs the same DCF algorithm or the device 24 and for the wireless box. Only one transmission FIFO is used for both the wireless box and the device 24 (although there is one FIFO for the DCF mode, and another one for the PCF mode). When it gains access to the medium, the IEEE802.11 MAC-HW sends packets from the FIFO, without any condition on the source. While there is one transmission FIFO, different buffers are allocated to respectively the device 24 and the wireless box. The FIFO queue receives data from the buffers. The algorithm according to which this is done is not the object of the present invention.

The reception of packets in the DCF mode will now be described.
Upon detection/reception of a unicast packet with either the device's or the station's MAC address, the IEEE802.11 MAC-HW acknowledges the packet. If the packet is a management packet, it is sent to the MLME part of the IEEE802.11 MAC-SW. Else, if the packet is a data packet, it is sent to the IEEE802.11MAC-SW delivery module part. Unicast packets are the only acknowledged packets.
The IEEE802.11MAC-SW also maintains a list of multicast addresses of groups of which the wireless box is member. Received multicast packets addressed to one of those groups are forwarded to an appropriate application of the wireless box. The software of the wireless box cannot know-unless a proprietary mechanism is implemented - whether the device 24 is part of one or more multicast groups, and what the addresses of these groups might be. Consequently, it forwards all multicast packets to the device 24.
Broadcast packets are forwarded both to the wireless box and the device.

The transmission of packets in the PCF mode will now be described.
According to an option of the PCF mode, the point coordinator polls the stations one by one to allow them to send packets in response to the poll. This option is called 'contention-free poll' or 'cf-poll'. If the wireless box implements only one transmission FIFO for both itself and the device 24, then only one of the two may be cf-pollable. In this case, according to the present embodiment, priority is given to the device connected to the wireless box: the packets from the device will be placed in the FIFO, not those of the wireless box. If two (or more) buffers are available, then both the device and the wireless box can be cf-polled.
As has already been mentioned, more than one device may be connected to the wireless box. If only one PCF transmission buffer is implemented by the hardware, only one device can be cf-polled. According to the present embodiment, the first device that is associated with the access point is arbitrarily chosen as the cf-polled device. If several buffers are available, then these buffers are allocated in the order of association of the devices, again for arbitrary reasons.

According to the present embodiment, the wireless box can be configured to start an independent BSS ('IBSS'). If there is no device connected to the wireless box, the MAC address of the wireless box is used for sending beacons. If there is a connected device, then the MAC address of this device is used. If more than one device is connected, then, as an example, the MAC address of the first associated device is used.

Although the above embodiment uses mainly as an example the case where a single device is connected to the wireless box, the invention is not limited to this case and can be extended to any number of devices. Moreover, the invention is not limited to the connection of an IEEE 802.11 network with an Ethernet network. Other types of networks may be connected using the invention.

## Claims

1. Method for connecting a device (24) not having wireless communication capability to a wireless network (21); **characterized** at the level of a bridge device (23) adapted to interface with the wireless network, the network comprising an access point (26), by the steps of:
- detecting a connection (25) between the device (24) and the bridge device (23);
- determining a Medium Access Control, MAC, address for the device (24) and for the bridge device (23); and
- separately registering as a wireless device, with the respective MAC addresses, the device and itself to the access point (26), wherein the bridge device (23) associates twice with the access point (26), once for each of the MAC addresses.

2. Method according to claim 1, further comprising the step of having the bridge (23) device monitor traffic on the wireless network (21) for the device (24).

3. Method according to claim 1 or 2, further comprising the step of programming packet filters for packets having as destination address the address of the device (24), and upon detection of such a packet, acknowledging receipt of said packet in place of the device.

4. Method according to one of the claims 2 or 3, further comprising at least one of the following steps:
- forwarding all multicast packets detected on the wireless network from the bridge device (23) to the connected device (24);
- forwarding all broadcast packets detected on the wireless network from the bridge device (23) to the connected device (24);
- forwarding unicast packets on the wireless network having as destination address the address of the connected device (24) to that device.

5. Method according to one of the claims 1 to 4, where the connection between the device (24) and the bridge device (23) is an Ethernet connection, and wherein the step of detecting the connection comprises monitoring packets on the Ethernet connection for detecting a previously unknown source address of an Ethernet device.

6. Method according to one of the claims 1 to 5, wherein the wireless network is of the IEEE 802.11 type, further comprising the step of maintaining a single management information base for both the bridge device (23) and the connected device (24).

7. Bridge device (23) adapted for communication on a wireless network (21) and for connection of a first device (24) not having wireless communication capability to a wireless network, the network comprising an access point (26) **characterized by** said bridge device comprising:
- means (41, 42, 44) for determining a Medium Access Control, MAC, address of the first device (24) and of the bridge device (23);
- means (41, 43, 44) for carrying out two separate device registrations to the access point, one for the bridge device (23), and one for the first device (24), using respective MAC addresses, wherein an association with the access point is performed twice, once for each of the MAC addresses.

## Patentansprüche

1. Verfahren zum Verbinden einer Vorrichtung (24), die keine drahtlose Kommunikationsfähigkeit hat, mit einem drahtlosen Netz (21); wobei das Verfahren auf der Ebene einer Brückenvorrichtung (23), die so ausgelegt ist, dass sie an das drahtlose Netz angeschlossen ist, wobei das Netz einen Zugangspunkt (26) umfasst, durch die folgenden Schritte **gekennzeichnet** ist:
- Erfassen einer Verbindung (25) zwischen der Vorrichtung (24) und der Brückenvorrichtung (23);
- Bestimmen einer Medienzugangskontrolladresse, MAC-Adresse, für die Vorrichtung (24) und für die Brückenvorrichtung (23); und
- getrenntes Registrieren der Vorrichtung und sich selbst als eine drahtlose Vorrichtung mit den jeweiligen MAC-Adressen gegenüber dem Zugangspunkt (26), wobei die Brückenvorrichtung (23) bei dem Zugangspunkt (26) zweimal, für jede der MAC-Adressen einmal, zugeordnet wird.

2. Verfahren nach Anspruch 1, das ferner den Schritt umfasst, die Brückenvorrichtung (23) den Verkehr in dem drahtlosen Netz (21) für die Vorrichtung (24) überwachen zu lassen.

3. Verfahren nach Anspruch 1 oder 2, das ferner den Schritt umfasst, Paketfilter für Pakete zu programmieren, die als Zieladresse die Adresse der Vorrichtung (24) haben, und bei Erfassung eines solchen Pakets anstelle der Vorrichtung den Empfang des Pakets zu quittieren.

4. Verfahren nach einem der Ansprüche 2 oder 3, das ferner mindestens einen der folgenden Schritte umfasst:
- Weiterleiten aller in dem drahtlosen Netz erfassten Multicast-Pakete von der Brückenvorrichtung (23) zu der verbundenen Vorrichtung (24),
- Weiterleiten aller in dem drahtlosen Netz erfassten Broadcast-Pakete von der Brückenvorrichtung (23) zu der verbundenen Vorrichtung (24),
- Weiterleiten von Unicast-Paketen in dem drahtlosen Netz, die als Zieladresse die Adresse der verbundenen Vorrichtung (24) haben, zu dieser Vorrichtung.

5. Verfahren nach einem der Ansprüche 1 bis 4, bei dem die Verbindung zwischen der Vorrichtung (24) und der Brückenvorrichtung (23) eine Ethernet-Verbindung ist und bei dem der Schritt des Erfassens der Verbindung das Überwachen von Paketen auf der Ethernet-Verbindung zum Erfassen einer zuvor unbekannten Quelladresse einer Ethernet-Vorrichtung umfasst.

6. Verfahren nach einem der Ansprüche 1 bis 5, bei dem das drahtlose Netz vom Typ IEEE 802.11 ist, wobei das Verfahren ferner den Schritt des Aufrechterhaltens einer einzigen Managementinformationsbank sowohl für die Brückenvorrichtung (23) als auch für die verbundene Vorrichtung (24) umfasst.

7. Brückenvorrichtung (23), die für die Kommunikation in einem drahtlosen Netz (21) und für die Verbindung einer ersten Vorrichtung (24), die keine drahtlose Kommunikationsfähigkeit hat, mit einem drahtlosen Netz ausgelegt ist, wobei das Netz einen Zugangspunkt (26) umfasst,
**dadurch gekennzeichnet, dass** die Brückenvorrichtung umfasst:
- Mittel (41, 42, 44) zum Bestimmen einer Medienzugangskontrolladresse, MAC-Adresse, der ersten Vorrichtung (24) und der Brückenvorrichtung (23);
- Mittel (41, 43, 44) zum Ausführen zweier getrennter Vorrichtungsregistrierungen gegenüber dem Zugangspunkt, einer für die Brückenvorrichtung (23) und einer für die erste Vorrichtung (24), unter Verwendung jeweiliger MAC-Adressen, wobei eine Zuordnung bei dem Zugangspunkt zweimal, für jede der MAC-Adressen einmal, ausgeführt wird.

## Revendications

1. Procédé de connexion d'un dispositif (24) non doté d'une fonction de communication sans fil vers un réseau sans fil (21) ; **caractérisé**, au niveau d'un dispositif de pont (23) adapté pour interfacer avec le réseau sans fil, le réseau comprenant un point d'accès (26), par les étapes consistant à :
- détecter une connexion (25) entre le dispositif (24) et le dispositif de pont (23) ;
- déterminer une adresse de contrôle d'accès au support (MAC) pour le dispositif (24) et pour le dispositif de pont (23) ; et
- enregistrer séparément en tant que dispositif sans fil, avec les adresses MAC respectives, le dispositif et lui-même avec le point d'accès (26), où le dispositif de pont (23) procède à une association deux fois avec le point d'accès (26), une fois pour chacune des adresses MAC.

2. Procédé selon la revendication 1, comprenant en outre l'étape de surveillance, par le dispositif de pont (23) du trafic sur le réseau sans fil (21) pour le dispositif (24).

3. Procédé selon la revendication 1 ou 2, comprenant en outre l'étape consistant à programmer des filtres de paquets pour des paquets possédant comme adresse de destination l'adresse du dispositif (24), et après la détection d'un tel paquet, à accuser réception dudit paquet à la place du dispositif.

4. Procédé selon une des revendications 2 ou 3, comprenant en outre au moins une des étapes suivantes :
- transmission de l'ensemble des paquets de multidiffusion détectés sur le réseau sans fil du dispositif de pont (23) vers le dispositif connecté (24) ;
- transmission de l'ensemble des paquets de diffusion détectés sur le réseau sans fil du dispositif de pont (23) vers le dispositif connecté (24) ;
- transmission de paquets de diffusion individuelle sur le réseau sans fil possédant comme adresse de destination l'adresse du dispositif connecté (24) à ce dispositif.

5. Procédé selon une des revendications 1 à 4, où la connexion entre le dispositif (24) et le dispositif de pont (23) est une connexion Ethernet, et où l'étape de détection de la connexion comprend la surveillance de paquets sur la connexion Ethernet pour détecter une adresse source auparavant inconnue d'un dispositif Ethernet.

6. Procédé selon une des revendications 1 à 5, où le réseau sans fil est du type IEEE 802.11, comprenant en outre l'étape de maintenance d'une base d'informations de gestion unique à la fois pour le dispositif de pont (23) et le dispositif connecté (24).

7. Dispositif de pont (23) adapté pour une communication sur un réseau sans fil (21) et pour une connexion d'un premier dispositif (24) non doté d'une fonction de communication sans fil à un réseau sans fil, le réseau comprenant un point d'accès (26), **caractérisé en ce que** ledit dispositif de pont comprend :
- un moyen (41, 42, 44) permettant de déterminer une adresse de contrôle d'accès au support (MAC) du premier dispositif (24) et du dispositif de pont (23) ;
- un moyen (41, 43, 44) permettant d'effectuer deux enregistrements de dispositif distincts sur le point d'accès, un pour le dispositif de pont (23) et un pour le premier dispositif (24), à l'aide des adresses MAC respectives, où une association avec le point d'accès est réalisée deux fois, une fois pour chacune des adresses MAC.
